# EUROPEAN PATENT APPLICATION

(11) **EP 0 854 557 A2**
(43) Date of publication of application: **22.07.1998**
(21) Application number: 98300142.1
(22) Date of filing: 09.01.1998
(51) Int. Cl.: H02J 13/00

(54) **Remote meter reading apparatus**

(30) Priority: 17.01.1997 GB 9700978
(71) Applicant: GEC-MARCONI LIMITED, Stanmore, Middlesex HA7 4LY (GB)
(72) Inventor: Cook, Peter Leslie, Haselmere, Surrey, GU27 3PS (GB); Edgar, Barry Dean, Portsmouth, Hampshire, PO5 2HQ (GB); Duddle, Ashley Robert, Fareham, Hampshire, PO16 7QP (GB)
(74) Representative: Fitchett, Stuart Paul

(57) **Abstract**

Apparatus is provided for retrofitting to an existing meter, particularly an electricity meter (1), the apparatus comprising a template (4) which is first aligned with a Ferraris disc of the meter, to which template components (6, 7 and 4b) are affixed which enable the meter to be read remotely. Apparatus in accordance with the invention can be retrofitted to many different types of meter, alleviating the need to have components specific to any one particular type of meter.

## Description

The present invention relates to apparatus which, when retrofitted to an existing meter, enables that meter to be read remotely. The invention is particularly applicable to meter employing a Ferraris disc, commonly used on electricity meters.

Most electricity meters use Ferraris discs comprising a circular disc driven by electro magnetic induction. For the purpose of the specification the term Ferraris disc extends to any equivalent member which experiences electromagnetic inductive rotational movement.

Electricity supply companies incur a considerable cost arising from the necessity to read electricity meters, particularly those in domestic premises where, because the quantity of electricity used will be relatively small compared to industrial premises, the costs associated with reading the meter are proportionally higher. For this reason, most electricity companies now estimate a proportion of the bills issued to domestic customers, but it is still necessary to read the meter periodically. In addition to the cost involved in reading the meter there is also the inconvenience caused to consumers in having to ensure that access can be gained to the premises if the meter cannot be read externally.

To overcome some of the above difficulties associated with reading domestic meters, it has been common practice for some time now to locate meters in new houses where they can be read externally, overcoming the problem with gaining access to premises.

More recently utility meters have been proposed which monitor consumption of a commodity and transmit that data to the commodity supplier, such transmission typically being via the telephone network, or alternatively via short range radio to a local receiver for a given area. Meters have also been developed which transmit a signal to a handheld remote reader carried by an official of the commodity supplier who is then able to read commodity meters from the outside of a premises in which the meter is located.

Meters which can be read remotely are particularly advantageous, for not only do they considerably reduce the cost associated with reading the meter, but they also permit the meter to be read far more frequently. This is particularly advantageous where a commodity can be bought by a consumer from a number of suppliers which provide the consumer with that product via a common supply network, for example an electricity grid. Remote reading of the meter enables the meter to be read at the commencement and termination of a period in which a consumer agrees to purchase a commodity from a particular supplier.

Remotely readable meters are now being fitted to certain new premises. However, the life expectancy of a meter, an electricity meter for example, is typically sixty years, although recalibration normally takes place every twenty years. It will therefore be appreciated that a considerable number of "conventional" meters are installed, and the capital investment required to replace every such meter would be considerable, for not only is there the cost of the meter but also the costs associated with fitting a new meter. These costs would be so great that they would normally exceed any saving that would be made over subsequent years; however, retention of the conventional meters, effectively prohibits a free market where a customer can select the supplier.

UK patent application GB 2 296 090A discloses a retrofit unit for an existing electricity meter which, when installed, enables the meter to be read remotely. The system works by monitoring rotation of the Ferraris disc common to almost all conventional electricity meters. The data derived from the Ferraris disc is transmitted to a remote reader, and the unit is cheaper to manufacture than a modern remotely readable meter but enables the same information to be derived utilising the existing meter.

The retrofit unit disclosed in GB 2 296 090 fits over the existing meter housing and therefore such systems, commonly referred to as "hoods", are normally specific to a certain type of meter, or employ a hood which may be common to a number of meter types but which then needs to be fitted with components specific to the particular meter to which it is going to fitted in order to ensure optical components for reading the Ferraris disc are correctly aligned.

The bulk associated with such "hoods" and the requirement for at least some components to be specific to particular meters requires that a considerable number of hoods or components need to be carried by an engineer retrofitting meters, for in the case of the UK alone there are in the order of fifty types of conventional meter in common use. It is the object of the present invention to provide an improved remote meter reading apparatus.

According to the present invention there is provided remote meter reading apparatus comprising: a housing arranged to be mounted on a window of an existing meter; an optical sensor located in the housing arranged to view and obtain data from the meter via the meter window; and a wireless transmitter in the housing for transmitting data derived from the sensor relating to units measured by the meter. Mounting the remote meter reading apparatus housing on a window of an existing meter enables the apparatus to be retrofitted to an existing meter without the requirement of an application specific hood or a hood for receiving components specific to a particular type of meter.

The housing being arranged to be mounted on a window of an existing meter enables the housing to be appropriately aligned by eye with the component of the meter to be monitored, and preferably the housing comprises a first portion arranged to be optically aligned by eye with a Ferraris disc of the meter. This portion, which may be in the form of a clear template, advantageously comprises alignment marks to be aligned with the Ferraris disc, enabling such alignment to take place and the first portion to be secured to the window of the meter prior to a second portion.

Preferably the second portion comprises the wireless transmitter and is retained in place by mechanically engaging with the first portion of the housing. In this way a very compact and inexpensive unit can be mounted directly on the window of an existing meter, alleviating the need for components specific to particular meters.

Advantageously, the optical sensor is arranged to detect rotation of a Ferraris disc of the meter, the apparatus further comprising a light source for illuminating a portion of the Ferraris disc, the source and detector being arranged such that when the housing is correctly aligned on the meter light is reflected off an edge of the Ferraris disc to the detector, wherein the light path between the source and detector is non-perpendicular to the plane of the meter window. Because meters are generally rectangular in form, their components tend to lie in planes either parallel to or orthogonal to the window of the meter. By arranging for the light between the source and detector to be other than perpendicular to the plane of the meter window, reflections from components of a meter are found to be greatly reduced. This is particularly advantageous where the remote meter reading apparatus is designed to be generally applicable to existing meters, for reflections from a certain component within a particular type of meter may interfere with the effective operation of the remote reader when fitted on that particular type of meter.

Advantageously the apparatus comprises a threshold monitoring circuit to monitor signal returns corresponding to both a substantially non-reflective mark on the edge of the Ferraris disc and to a substantially reflecting edge portion of the disc, and set thresholds in dependence thereon, a detected signal crossing such a threshold indicating that the leading edge of the mark on the Ferraris disc has passed the detector. This enables the apparatus to take into account any ambient light level which may affect the detector, and also enables the apparatus to take into account any change in intensity of the light source due to ageing, or changes in sensitivity of the detector.

The wireless transmitter may conveniently be a radio transmitter, but optical transmitters may be appropriate in certain applications. Where the meter to which the apparatus is retrofitted is an electricity meter, then the apparatus preferably further comprises a power supply unit for obtaining power for the apparatus from the electricity supply being measured.

It has been found particularly advantageous, where the transmitter is a radio transmitter, to employ an antenna contained within the housing, such antenna being a planar, or sheet, antenna. Where such an antenna is employed, it has been found particularly advantageous to use a printed circuit board of the apparatus as a ground plane for the antenna.

One embodiment of the present invention will now be described, by way of example only, with reference to the accompanying figures. in which like numerals are used throughout to indicate like parts, and of which:-
Figure 1 is a perspective view of apparatus in accordance with the present invention;
Figure 2 illustrates a first portion of the housing mounted on an existing meter;
Figure 3 is a cross-section through the components illustrated in Figure 1 when assembled, viewed in the direction of line **1-1** of Figure 1;
Figure 4 is a cross-section along the line **3-3** of Figure 3;
Figure 5 is a schematic illustration of the electrical components of the apparatus in accordance with the present invention; and
Figures 6 and 7 are respective views of a removal tool for the apparatus illustrated in Figure 1.

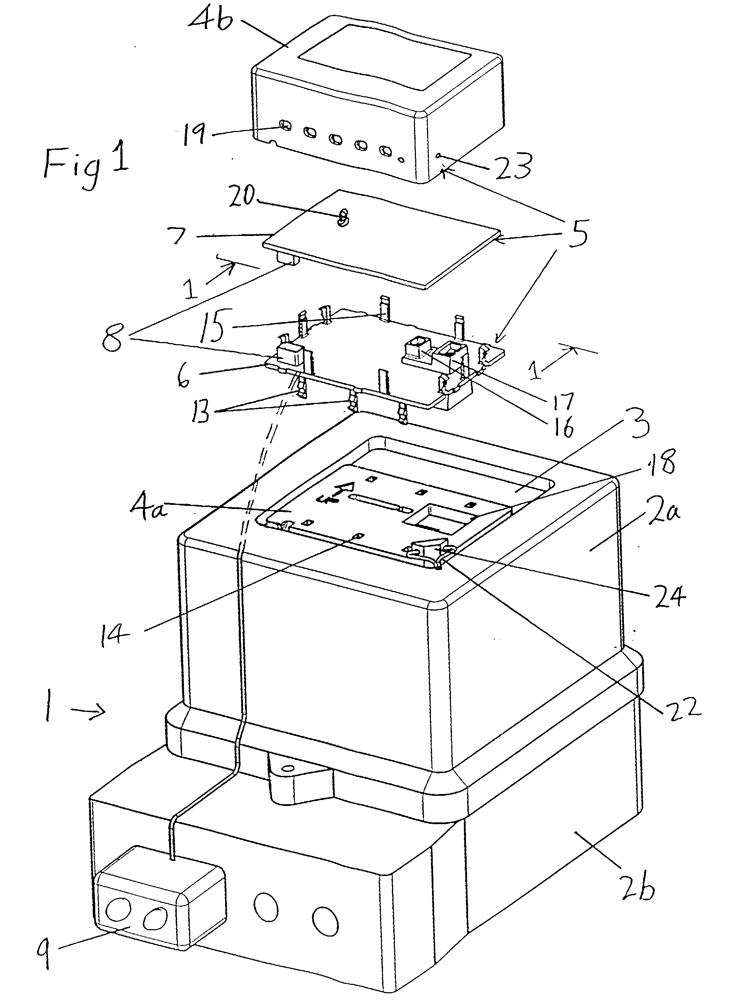

Referring to Figure 1, a conventional electricity meter 1 comprises a sealed. tamper-resistant casing 2a, 2b, casing 2a having a window 3 through which the dials of the meter and Ferraris disc are visible. Once installed, the meter 1 is sealed by tamper-proof seals, preventing access to the consumer.

To the window 3 of the meter 1 is secured a transparent perspex template 4a which forms a first portion of a housing 4 of remote meter reading apparatus in accordance with the present invention, and indicated generally as 5.

The remote meter reading apparatus 5 further comprises an inner cover 6, a printed circuit board (PCB) 7 and outer cover 4b comprising the second portion of the housing 4. The printed circuit board 7 receives power via plug and socket 8 connecting it to the inner cover 6 which receives electrical power by power supply 9. The power supply 9 comprises a low voltage transformer producing a rectified 8 Volts DC output derived from the mains supply to the meter.

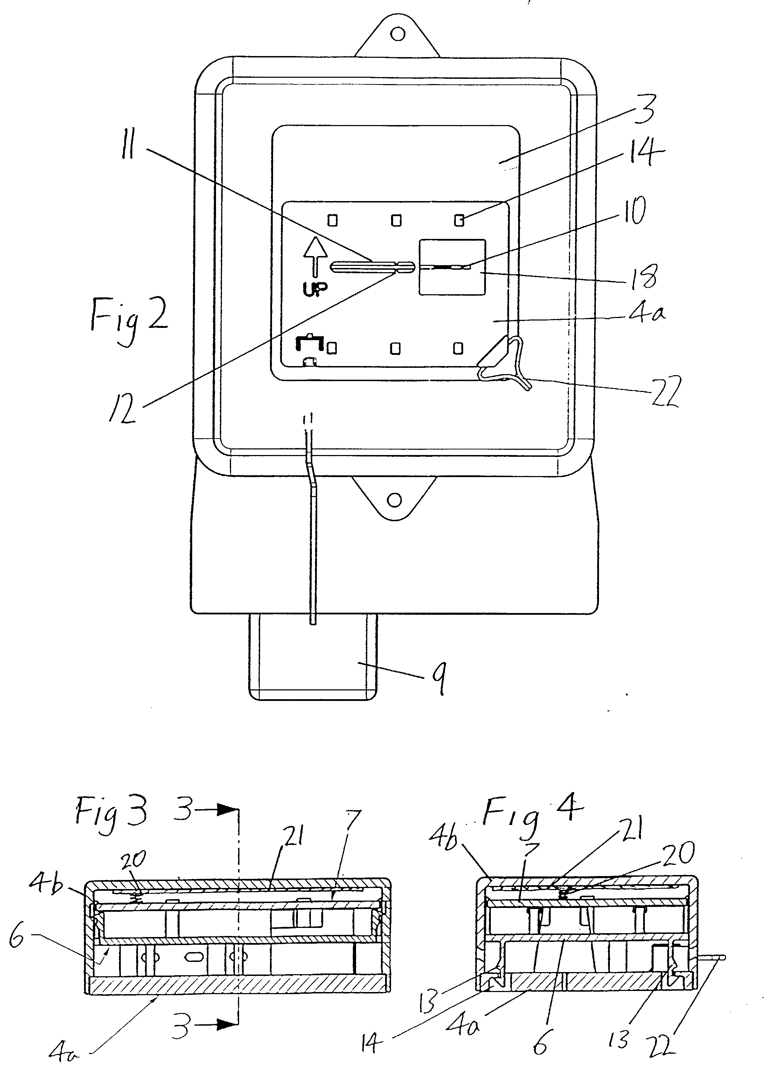

Referring to Figure 2, the template 4 is shown bonded to the window 3 of the meter having been aligned such that the Ferraris disc 10 appears centrally within aperture 11 of the template, with pointers 12 being optically aligned by eye with the axis of the Ferraris disc.

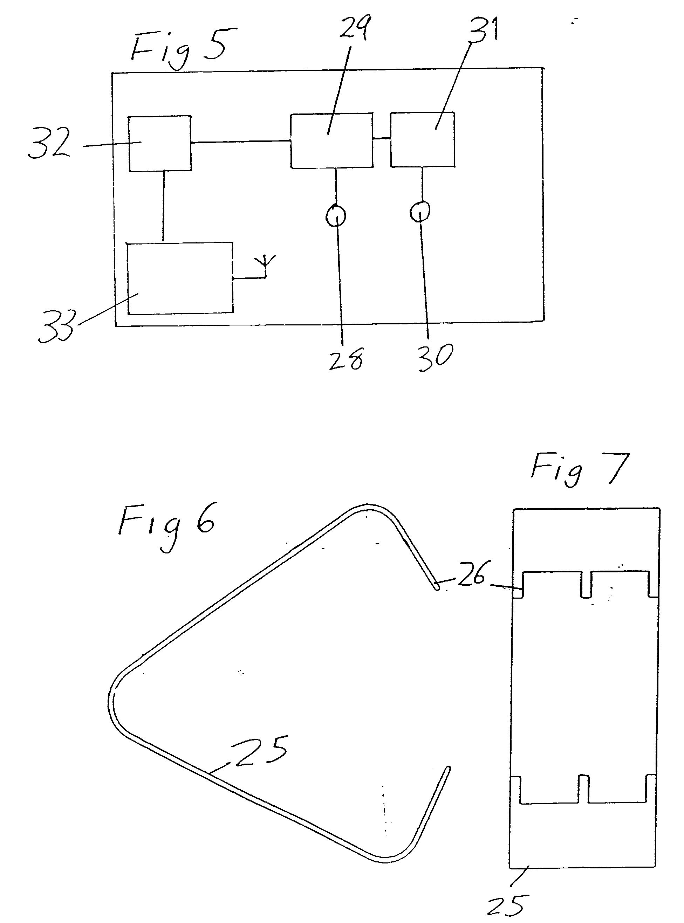

Once template 4 is bonded in place, the inner cover 6 is clipped into position on the template by means of lugs 13 engaging in corresponding apertures 14, as can be more clearly seen in Figures 3 and 4 showing the assembled structure.

The printed circuit board 7 is retained in position by lugs 15 with an LED and photodetector positioned on the underside of the PCB board 7. When assembled the LED and photodetector sit in shrouds 16 and 17 respectively which extend through the inner cover 6 to aperture 18 in the template. Outer cover housing 4b is then assembled over the complete device, with certain of the apertures 19 engaging with lugs 13, or alternatively with screws not shown. A spring 20 connects tracks on the PCB to a sheet aerial 21 located on the inner surface of the outer cover 4b. The spring itself is selected such that it has an appropriate number of turns and dimensions to be inductively matched to the capacitance between the antenna element and the printed circuit board 7.

Once the remote meter reading apparatus is assembled, a tamper-proof seal 22 is inserted through apertures 23 in the outer cover 4b securing the outer cover to the template 4a through a corresponding aperture in protrusion 24.

If it is desirable to remove, for replacement or otherwise, the remote meter reading apparatus, then removal tool 25 shown in side elevation in Figure 6 and end elevation in Figure 7 is used to release the inner cover 6, its associated printed circuit board 7 and outer cover of housing 4b from template 4. Inserting teeth 26 of the tool though apertures 19 releases lugs 13. The teeth and lugs are deliberately arranged so as to make it difficult to remove the assembly without the appropriate tool, and in any case, the tamper-resistant seal still has to be removed first.

Referring now to Figure 5, there is illustrated schematically the circuit components found on printed circuit board 7 of Figure 1. These comprise an LED 28 and a modulated source signal supply 29, providing a modulated signal to LED 28, and a photodetector 30 the output of which is processed via ambient light adaptation algorithm processor 31 which compares the received signal with the modulated signal of the LED. In this way the effects of any ambient light are substantially overcome, making the apparatus less susceptible to interference. The processor 31 also performs a thresholding function, tracking lows and highs and setting thresholds accordingly. Pulses detected corresponding to each passing of the mark on the Ferraris disc of the meter are recorded by counter 32 and in response to an interrogation signal being received by the transceiver 33 the count is transmitted by the transceiver to a remote receiver.

Many variations of the invention as defined by the following claims will be apparent to one skilled in the art. In particular, although the invention has been described above with reference to an electricity meter application, it will be realised that it can equally well be employed with other types of meter.

## Claims

1. Remote meter reading apparatus (5) comprising: a housing (4a, 4b, 6); an optical sensor (30) located in the housing arranged to view and obtain data from a meter (1) via a window (3) in the meter (1); and a wireless transmitter (33) in the housing for transmitting data derived from the sensor (30) relating to units measured by the meter, characterised in that the housing (4a, 4b, 6) is arranged to be mounted on window (3) of the existing meter (1).

2. Apparatus as claimed in claim 1 wherein the housing comprises a first portion (4a) arranged to be optically aligned by eye with a Ferraris disc (10) of the meter.

3. Apparatus as claimed in claim 2 wherein the first portion (4a) of the housing is arranged to be aligned with the Ferraris disc and secured to the window of the meter prior to a second portion (6) of the housing being secured to the first portion (4a).

4. Apparatus as claimed in claim 3 wherein the second portion (6) comprises the wireless transmitter (33) which is retained in place by mechanically engaging with the first portion (4a) of the housing.

5. Apparatus as claimed in any of claims 2 to 5 wherein the first portion (4a) is transparent.

6. Apparatus as claimed in any preceding claim wherein the optical sensor (30) is arranged to detect rotation of a Ferraris disc (10) of the meter, the apparatus further comprising a light source (28)for illuminating a portion of the Ferraris disc, the source and detector being arranged such that when the housing is correctly aligned on the meter light is reflected off an edge of the Ferraris disc to the detector, wherein the light path between the source and detector is non-perpendicular to the plane of the meter window.

7. Apparatus as claimed in claim 6 wherein the source is modulated and the detector is a synchronous detector arranged to receive only the modulated signal.

8. Apparatus as claimed in claim 7 comprising a threshold monitoring circuit to monitor signal returns corresponding to both a substantially non-reflective mark on the edge of the Ferraris disc and to a substantially reflecting edge portion of the disc, and set thresholds in dependence thereon, the returned signal crossing such threshold indicating that the leading edge of the mark on the Ferraris disc has passed the detector.

9. Apparatus as claimed in any preceding claim wherein the wireless transmitter is a radio transmitter.

10. Apparatus as claimed in any preceding claim wherein the wireless transmitter is an optical transmitter.

11. Apparatus as claimed in any preceding claim for monitoring the rotation of a Ferraris disc of a utility meter.

12. Apparatus as claimed in claim 11 wherein the utility meter is an electricity meter and the apparatus further comprises a power supply unit for obtaining power for the apparatus from the electricity supply being measured.

13. Apparatus as claimed in any preceding claim further comprising a memory for storing data derived from the meter wherein the accumulated stored data is periodically transmitted to a remote station.

14. Apparatus as claimed in claim 13 wherein the data is transmitted in response to receiving an interrogation signal.

15. Apparatus as claimed in any preceding claim wherein an antenna (21) of the transmitter is contained within the housing.

16. Apparatus as claimed in claim 15 wherein the antenna (21) is a planar antenna.

17. Apparatus as claimed in claim 16 further comprising a printed circuit board (7), wherein the antenna (21) and printed circuit board (7) are spaced apart and connected such that the printed circuit board functions as a ground plane for the planar antenna.
